# EUROPEAN PATENT SPECIFICATION

(11) **EP 2 953 133 B1**
(45) Date of publication and mention of the grant of the patent: **07.08.2019**
(21) Application number: 15170892.2
(22) Date of filing: 05.06.2015
(51) Int. Cl.: G11B 27/10, G11B 27/22, G11B 27/28, G11B 27/30, G06F 3/0484, H04N 7/088, G11B 19/02, G11B 27/00, H04N 5/76

(54) **METHOD AND DEVICE OF PLAYING MULTIMEDIA**
VERFAHREN UND VORRICHTUNG ZUM ABSPIELEN VON MULTIMEDIA
PROCÉDÉ ET DISPOSITIF DE LECTURE MULTIMÉDIA

(30) Priority: 06.06.2014 CN 201410250800
(43) Date of publication of application: 09.12.2015
(73) Proprietor: Xiaomi Inc., Beijing 100085 (CN)
(72) Inventor: Wang, Bin, 100085 BEIJING (CN); Zheng, Zhiguang, 100085 BEIJING (CN); Ji, Dongfang, 100085 BEIJING (CN)
(74) Representative: Underwood, Nicolas Patrick

(56) References cited:
- EP-A1- 1 960 994
- WO-A1-2005/073972
- WO-A1-2011/158399
- JP-A- 2007 041 302
- JP-A- 2007 235 543
- JP-A- 2009 182 473
- US-A1- 2011 200 299
- US-A1- 2011 301 728
- US-A1- 2012 029 668
- CE WANG ET AL: "Automatic story segmentation of news video based on audio-visual features and text information", MACHINE LEARNING AND CYBERNETICS, 2003 INTERNATIONAL CONFERENCE ON NOV. 2-5, 2003, PISCATAWAY, NJ, USA,IEEE, vol. 5, 2 November 2003 (2003-11-02), pages 3008-3011, XP010682229, ISBN: 978-0-7803-7865-0

## Description

### TECHNICAL FIELD

The present disclosure relates to a field of multimedia processing technology, and more particularly to a method and a device of playing multimedia.

### BACKGROUND

In the related art, when a video is playing, sometimes a pause appears, which can be caused by an active suspension by the user for subjective reasons, or by a network. The pause may occur at any time during the play or anywhere in the video. Thus the pause may likely be in the middle of a sentence of the video. Accordingly, when the user resumes playing the video, the video will start from the middle of a sentence, or even starts from a half of characters or words, which is not convenient for user to understand the plot continuously.

Some multimedia playing software or webpage are designed to tape back the video for a few seconds, e.g., 5 seconds, when the user resumes playing the video. The tape-back time is generally a fixed amount of time set in advance.

Although the user is given a certain back time to help recall the content he/she watched before the video is paused, the predetermined tape-back time does not guarantee that the video will resume from a beginning of a sentence. Thus the problem that the user feels inconvenient to pick up the content of a resumed video remains. Document US 2011/301728 describes an audio output device performing continuous audio interaction with interruptive audio, document WO 2011/158399 describes a content reproduction apparatus and method and document JP 2007 235543 an optical disk drive. Document EP 1 960 994 describes a system and a method for winding audio content using a voice activity detection algorithm. Document US 2012/0029668 describes an audio playing method and apparatus. The scientific paper of Ce Wang et al, published in "Machine learning and cybernetics", 2003, Piscataway, NJ, USA, IEEE, vol. 5, 2 November 2003, pages 3008-3011, XP010682229, ISBN: 978-0-7803-7865-0, describes an automatic story segmentation of news video based on audio-visual features and text information.

### SUMMARY

In order to overcome the problems in the related art, the present disclosure provides a method and a device of playing multimedia.

The invention is defined in the independent claims 1, 5, 9 and 10.

According to a first aspect, the invention relates to a method of playing multimedia, comprising:
acquiring audio data and/or subtitle data of a first preset time length before a pause position of a multimedia;
determining a starting statement position of a whole statement according to the audio data and/or the subtitle data; and
continuing to play the multimedia according to the starting statement position when an instruction of continuing to play the multimedia is detected or a condition of continuing to play the multimedia is met.

In the embodiments of the present disclosure, the starting statement position of a whole statement is determined by analyzing the audio data and/or the subtitle data; video or audio is continuously played according to the determined starting statement position, so that the user may catch and understand the whole statement when continuing to play after pausing, the dialogues in the video or the audio are more natural, and the plots are more continuous. Therefore, the user's experience during the video or audio playing is improved.

In an optional embodiment, the step of determining the starting statement position of the whole statement according to the audio data comprises:
detecting a time interval between two adjacent audio signals in the audio data; and
determining a time position between the two adjacent audio signals as the starting statement position when the time interval between the two adjacent audio signals is larger than a first preset interval.

In an optional embodiment, the step of determining the starting statement position of the whole statement according to the subtitle data comprises:
acquiring an initial display time and/or an end display time of each subtitle in the subtitle data; and
determining the starting statement position according to the initial display time and/or the end display time of the subtitle.

In an optional embodiment, the step of determining the starting statement position of the whole statement according to the audio data and the subtitle data comprises:
detecting a playing time of each audio signal of the audio data;
acquiring an initial display time and/or an end display time of a subtitle corresponding to the adjacent audio signals when a time interval between two adjacent audio signals is larger than a first preset interval; and
determining the starting statement position according to the playing time of the two adjacent audio signals and the initial display time and/or the end display time of the subtitle corresponding to the adjacent audio signals.

By determining the starting statement position according to the time interval between the adjacent audio signals or the time interval between the adjacent subtitles, the audio or the video is continued to be played according to the starting statement position. Thus, the user may catch and understand the whole statement when the audio or the video is continued to be played, the dialogues in the video or the audio are more natural, and the plots are more continuous. Therefore, the user's experience during the playing of video or audio is improved. In addition, the audio data and the subtitle data are analyzed at the same time, and the time interval between the two whole statements is determined, so as to obtain the starting statement point of the whole statement more accurately, which neither affects the user to understand the statement nor affects the user to watch the subtitle.

In an optional embodiment, the step of determining the starting statement position of the whole statement according to the audio data comprises:
filtering the audio data according to voice frequency to obtain voice audio data;
detecting a time interval between two adjacent voice audio signals in the voice audio data; and
determining a time position between the two adjacent voice audio signals as the starting statement position when the time interval between adjacent two voice audio signals is larger than the first preset interval.

The audio data are firstly filtered according to generally voice frequency, so as to simply analyze the voice audio signal, and the starting statement position is determined according to the time interval between the voice audio signals, so that the determination to the starting statement position is more certain.

In an optional embodiment, when the starting statement positions of at least two whole statements are determined according to the audio data and/or the subtitle data, the step of continuing to play the multimedia according to the starting statement position comprises:
continuing to play the multimedia from the starting statement position closest to the pause position; or
continuing to play the multimedia from the Nth starting statement position before the pause position when a number of return statements is preset as N, where N is an integer greater than or equal to 2.

When multiple starting statement positions are determined, one of these starting statement position is selected flexibly as a starting point to continue to play audio and video after pausing, so that the user may catch and understand the whole statement when continuing to play, the dialogues in the video or the audio are more natural, and the plots are more continuous. Therefore the user's experience during the playing of video or audio is improved.

In an optional embodiment, when the starting statement position of the whole statement is not determined according to the audio data and/or the subtitle data within the first preset time length before the pause position of the multimedia, the method further comprises:
acquiring the audio data and/or the subtitle data of the first preset time length, wherein a playing time of the audio data and/or the subtitle data of the first preset time length acquired currently is located before a playing time of the audio data and/or the subtitle data of the first preset time length previously acquired;
determining the starting statement position of the whole statement from the audio data and/or the subtitle data of the first preset time length acquired currently; and
continuing to acquire the audio data and/or the subtitle data of the first preset time length and determining the starting statement position of the whole statement until at least one starting statement position of a whole statements is determined, if the starting statement position of the whole statement is not determined from the audio data and/or the subtitle data of the first preset time length acquired currently.

In an optional embodiment, the step of acquiring the audio data and/or the subtitle data within the first preset time length before the pause position of the multimedia comprises:
acquiring a time position located before the pause position of the multimedia and spaced from the pause position at a second preset time length;
acquiring the audio data and/or the subtitle data within the first preset time length before the time position; and
the step of determining the starting statement position of the whole statement according to the audio data and/or the subtitle data comprises:
determining the starting statement position of the whole statement according to the audio data and/or the subtitle data within the first preset time length before the time position.

A time position for a period of time before the pause position may be firstly selected, and is then taken as a starting point for finding a starting statement position of a whole statement backwards, so that the user may obtain more extra time to enter into video plot.

According to a second aspect, the invention relates to a device of playing multimedia, comprising:
an acquisition module configured to acquire audio data and/or subtitle data of a first preset time length before a pause position of a multimedia;
an analysis module configured to determine a starting statement position of a whole statement according to the audio data and/or the subtitle data acquired by the acquisition module; and
a playing module configured to continue to play the multimedia according to the starting statement position determined by the analysis module when an instruction of continuing to play the multimedia is detected or a condition of continuing to play the multimedia is met.

In an optional embodiment, the analysis module comprises:
a detecting unit configured to detect a time interval between two adjacent audio signals in the audio data acquired by the acquisition module; and
an analysis determining unit configured to determine a time position between the two adjacent audio signals as the starting statement position when the time interval between two adjacent audio signals detected by the detecting unit is larger than a first preset interval.

In an optional embodiment, the analysis module comprises:
an acquisition unit configured to acquire an initial display time and/or an end display time of each subtitle in the subtitle data acquired by the acquisition module; and
an analysis determining unit configured to determine the starting statement position according to the initial display time and/or the end display time of the subtitle acquired by the acquisition unit.

In an optional embodiment, the analysis module comprises:
a detecting unit configured to detect a playing time of each audio signal of the audio data acquired by the acquisition module;
an acquisition unit configured to acquire an initial display time and/or an end display time of a subtitle corresponding to the adjacent audio signals when a time interval between two adjacent audio signals detected by the detecting unit is larger than a first preset interval; and
an analysis determining unit configured to determine the starting statement position according to the playing time of the two adjacent audio signals and the initial display time and/or the end display time of the subtitle corresponding to the adjacent audio signals acquired by the acquisition unit.

In an optional embodiment, the analysis module further comprises:
a filtering unit configured to filter the audio data acquired by the acquisition module according to voice frequency to obtain voice audio data;
the detecting unit being configured to detect a time interval between two adjacent voice audio signals in the voice audio data filtered by the filtering unit; and
the analysis determining unit being configured to determine a time position between the two adjacent voice audio signals as the starting statement position when the time interval between the two adjacent voice audio signals detected by the detecting unit is larger than the first preset interval.

In an optional embodiment, when the starting statement positions of at least two whole statements are determined by the analysis module, the playing module is configured to continue to play the multimedia from the starting statement position closest to the pause position; or to continue to play the multimedia from the N^{th} starting statement position before the pause position when a number of return statements is preset as N, where N is an integer greater than or equal to 2.

In an optional embodiment, when the starting statement position of the whole statement is not determined by the analysis module according to the audio data and/or the subtitle data within the first preset time length before the pause position of multimedia, the acquisition module is configured to acquire the audio data and/or the subtitle data of the first preset time length, wherein a playing time of the audio data and/or the subtitle data of a first preset time length acquired currently is located before the playing time of the audio data and/or the subtitle data of the first preset time length previously acquired; and
the analysis module is configured to determine the starting statement position of the whole statement from the audio data and/or the subtitle data of the first preset time length acquired by the acquisition module currently; and to continue to acquire the audio data and/or the subtitle data of the first preset time length and determining the starting statement position of the whole statement until at least one starting statement position of a whole statements is determined, if the starting statement position of the whole statement is not determined from the audio data and/or the subtitle data of the first preset time length acquired currently.

In an optional embodiment, the acquisition module is configured to acquire a time position located before the pause position of the multimedia and spaced from the pause position at a second preset time length; and is configured to acquire the audio data and/or the subtitle data within the first preset time length before the time position; and
the analysis module is configured to determine the starting statement position of the whole statement according to the audio data and/or the subtitle data within the first preset time length before the time position.

According to a third aspect, the invention relates to a device of playing multimedia, comprising:
a processor; and
a memory for storing instructions executable by the processor;
wherein the processor is configured to:
acquire audio data and/or subtitle data of a first preset time length before a pause position of a multimedia;
determine a starting statement position of a whole statement according to the audio data and/or the subtitle data; and
continue to play the multimedia according to the starting statement position when an instruction of continuing to play the multimedia is detected or a condition of continuing to play the multimedia is met.

In an optional embodiment, the steps of the method of playing multimedia are determined by computer program instructions.

Consequently, according to a fourth aspect, the invention is also directed to a computer program for executing the steps of a method of playing multimedia as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method of playing multimedia according to an exemplary embodiment.
Fig. 2 is a schematic diagram showing a time axis between a pause position and a starting statement position according to an exemplary embodiment.
Fig. 3 is a flow chart showing a step of determining a starting statement position of a method of playing multimedia according to an exemplary embodiment.
Fig. 4 is a flow chart showing a step of determining a starting statement position of a method of playing multimedia according to an exemplary embodiment.
Fig. 5 is a flow chart showing a step of determining a starting statement position of a method of playing multimedia according to an exemplary embodiment.
Fig. 6 is a flow chart showing a step of determining a starting statement position of a method of playing multimedia according to an exemplary embodiment.
Fig. 7 is a schematic diagram showing a time axis between a pause position and a starting statement position according to an exemplary embodiment.
Fig. 8 is a schematic diagram showing a time axis between a pause position and a starting statement position according to an exemplary embodiment.
Fig. 9 is a flow chart showing a method of playing multimedia according to an exemplary embodiment.
Fig. 10 is a flow chart showing a method of playing multimedia according to an exemplary embodiment.
Fig. 11 is a block diagram showing a device of playing multimedia according to an exemplary embodiment.
Fig. 12a is a block diagram showing an analysis module according to an exemplary embodiment.
Fig. 12b is a block diagram showing an analysis module according to an exemplary embodiment.
Fig. 12c is a block diagram showing an analysis module according to an exemplary embodiment.
Fig. 12d is a block diagram showing an analysis module according to an exemplary embodiment.
Fig. 13 is a block diagram showing a device of playing multimedia playing according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

The multimedia in the embodiments of the present disclosure comprises video, audio, and the like. A pause occurs in playing the multimedia, which may be actively triggered by the user, or may be due to a network. The situation in which the user actively pauses the playing of the multimedia is known by operation instructions. The playing of the multimedia pause due to the network may be known by detecting the remained data volume which has been not played in a video buffer zone, and the playing of the video will be stopped when there are no video buffer data available for playing.

In the embodiments of the present disclosure, after the playing of the multimedia is paused, the playing of the multimedia may start again from a whole statement. This is achieved by analyzing a statement starting point of a whole statement in the audio data and/or the subtitle data in the multimedia. Therefore, the problem of affecting the user to understand the statement due to the playback at fixed time is solved.

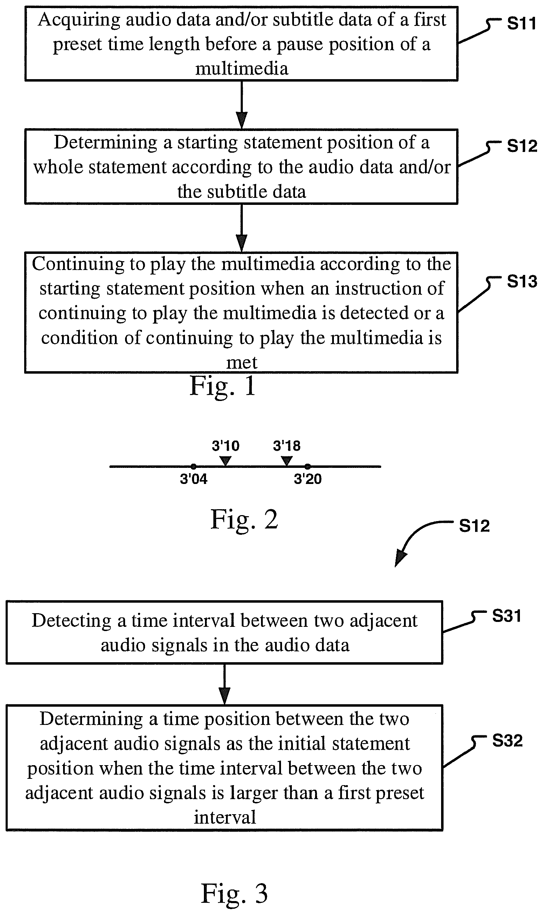

Fig. 1 is a flow chart showing a method of playing multimedia according to an exemplary embodiment. As shown in Fig. 1, the method of playing multimedia is implemented by a terminal, comprises the following steps.

In step S11, audio data and/or subtitle data of a first preset time length before a pause position of a multimedia is acquired.

In step S12, a starting statement position of a whole statement according to the audio data and/or the subtitle data is determined.

In step S13, the multimedia is continued to be played according to the starting statement position when an instruction of continuing to play the multimedia is detected or a condition of continuing to play the multimedia is met.

In the embodiments, the starting statement position of a whole statement is determined by analyzing the audio data and/or the subtitle data; video or audio is continued to be played according to the determined starting statement position, so that the user may catch and understand the whole statement when this video or audio is continued to be played, the dialogues in the video or the audio are more natural, and the plots are more continuous. Therefore, the user's experience during the playing of video or audio is improved.

Generally, the time length of a whole statement is no more than 16 seconds. In the actual application, in step S11, the first preset time length may be set to 16 seconds. For example, Fig. 2 is a schematic diagram showing a time axis between a pause position and a starting statement position according to an exemplary embodiment. As shown in Fig. 2, when the user plays a video, and when the pause position is at 3 minutes and 20 seconds, the audio data and/or the subtitle data may be acquired from 16 seconds before the pause position, namely, from 3 minutes and 4 seconds to 3 minutes and 20 seconds, so as to determine the starting statement position of the whole statement in these data.

Fig. 3 is a flow chart showing the step S12 of the method of playing multimedia according to an exemplary embodiment. As shown in Fig. 3, the step S12 of determining the starting statement position of the whole statement according to the audio data comprises the following steps.

In step S31, a time interval between two adjacent audio signals in the audio data is detected.

In step S32, a time position, which can be any position between the two adjacent audio signals is determined as the starting statement position, when the time interval between two adjacent audio signals is larger than a first preset interval.

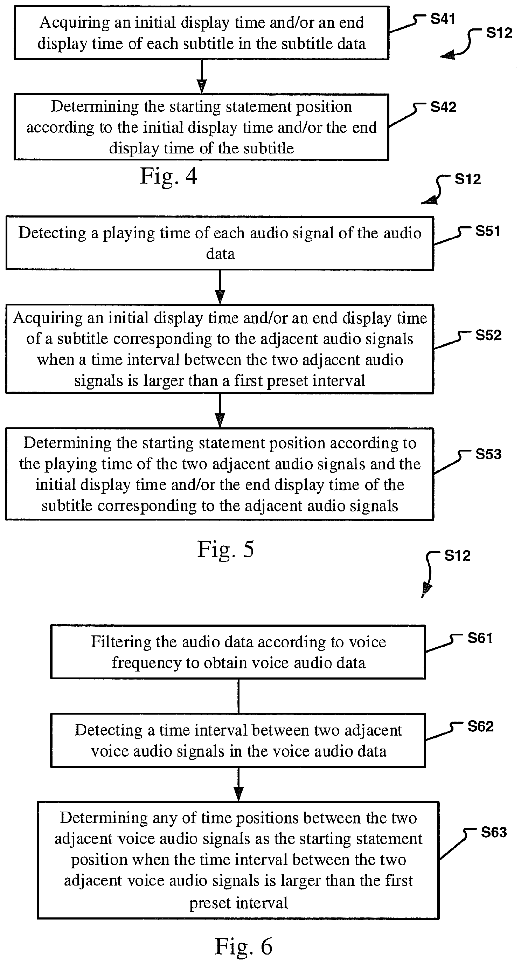

Fig. 4 is a flow chart showing the step S12 of the method of playing multimedia according to an exemplary embodiment. As shown in Fig. 4, alternatively, the step S12 of determining the starting statement position of the whole statement according to the subtitle data comprises the following steps.

In step S41, an initial display time and/or an end display time of each subtitle in the subtitle data is acquired.

In step S42, the starting statement position is determined according to the initial display time and/or the end display time of the subtitle. Since there is a time interval between two statements, such as 0.1 seconds, the complete statement may be determined according to the interval time length between the audio signals. Similarly, the complete statement may also be determined according to the time interval between the adjacent subtitles when the audio file played by the user has subtitles. For example, the end display time of the acquired previous subtitle is 3 minutes, 04 seconds and 160 milliseconds, the initial display time of the later subtitle is 3 minutes, 04 seconds and 290 milliseconds, the interval between the two subtitles is 130 milliseconds, namely, 0.13 seconds, and is more than 0.1 seconds, and thus it can be judged that a starting statement position exists between the two subtitles.

Alternatively, in some audio and video files, a subtitle itself corresponds to a whole statement, and thus, the starting statement position may be determined according to the initial display time of the current subtitle or the end display time of the previous subtitle.

In the alternative solutions, by determining the starting statement position according to the time interval between the adjacent audio signals or the time interval between the adjacent subtitles, the audio or the video is continued to be played according to the starting statement position. Thus, the user may catch and understand the whole statement when the audio or the video is continued to be played, the dialogues in the video or the audio are more natural, and the plots are more continuous. Therefore, the user's experience during the playing of video or audio is improved.

Fig. 5 is a flow chart showing the step S12 of the method of playing multimedia according to an exemplary embodiment. As shown in Fig. 5, alternatively, the step S12 of determining the starting statement position of the whole statement according to the audio data and the subtitle data comprises the following steps.

In step S51, a playing time of each audio signal of the audio data is detected.

In step S52, an initial display time and/or an end display time of a subtitle corresponding to the adjacent audio signals is acquired when a time interval between two adjacent audio signals is larger than a first preset interval.

In step S53, the starting statement position is determined according to the playing time of the two adjacent audio signals and the initial display time and/or the end display time of the subtitle corresponding to the adjacent audio signals.

For example, the playing time of the two adjacent audio signals obtained by analyzing the audio data are 3 minutes and 09 seconds and 3 minutes and 12 seconds. The time interval between the two adjacent audio signals is 3 seconds, and is larger than 0.1 seconds set in advance; however, the show time of the adjacent two subtitles corresponding to the two adjacent audio signals are 3 minutes and 08 seconds and 3 minutes and 11 seconds, and the time interval is also larger than 0.1 seconds. Therefore, it can be determined that time intervals of the audio signals and the subtitles overlap at least at 3 minutes and 10 seconds, and 3 minutes and 10 seconds may be used as the starting point for continuing to play the multimedia.

In the alternative solutions, the audio data and the subtitle data are analyzed at the same time, and the time interval between the two whole statements is determined, so as to obtain the starting statement point of the whole statement more accurately, which neither affects the user to understand the statement nor affects the user to watch the subtitle.

Fig. 6 is a flow chart showing the step S12 of the method of playing multimedia according to an exemplary embodiment. As shown in Fig. 6, alternatively, the step S12 of determining the starting statement position of the whole statement according to the audio data comprises the following steps.

In step S61, the audio data are filtered according to voice frequency to obtain voice audio data.

In step S62, a time interval between two adjacent voice audio signals in the voice audio data is determined.

In step S63, a time position between the two adjacent voice audio signals is determined as the starting statement position when the time interval between adjacent two voice audio signals is larger than the first preset interval.

In the alternative solutions, the background music (music, environmental sound, etc.) can interfere with the voice in the audio data. Therefore, the audio data are firstly filtered according to general voice frequency so as to analyze the voice audio signal, and the starting statement position is determined according to the time interval between the voice audio signals so that the starting statement position is more accurately determined.

Alternatively, when the starting statement positions of at least two whole statements are determined according to the audio data and/or the subtitle data, the step S13, comprises: continuing to play the multimedia from the starting statement position closest to the pause position; or continuing to play the multimedia from the N^{th} starting statement position before the pause position when a number of return statements is preset as N, where N is an integer greater than or equal to 2.

For example, as shown in Fig. 2, the two starting statement positions obtained by analyzing the audio data are at 3 minutes and 10 seconds and 3 minutes and 18 seconds, the pause position is at 3 minutes and 20 seconds. The 3 minutes and 18 seconds starting statement position, which is closest to the pause position than the other starting statement position, may be selected as a position from which the video continues to be played, or, if the number of the return statements is preset at 2, the video continues to be played from two statements, then the 3 minutes and 10 seconds starting statement position may be selected as a position from which the video continues to be played.

In the alternative solutions, when multiple starting statement positions are determined, one of these starting statement positions is flexibly selected as a starting point to continue to play audio and video after pausing, so that the user may catch and understand the whole statement when continuing to play, the dialogues in the video or the audio are more natural, and the plots are more continuous. Therefore, the user's experience during the playing of video or audio is improved.

Alternatively, in step S11 and step S12, when the starting statement position of the whole statement is not determined according to the audio data and/or the subtitle data within the first preset time length before the pause position of the multimedia, the method further comprises:

acquiring the audio data and/or the subtitle data of the first preset time length, wherein a playing time of the audio data and/or the subtitle data of the first preset time length acquired currently is before a playing time of the audio data and/or the subtitle data of the first preset time length previously acquired;

determining the starting statement position of the whole statement from the audio data and/or the subtitle data of the first preset time length acquired currently; and

continuing to acquire the audio data and/or the subtitle data of the first preset time length and determining the starting statement position of the whole statement until at least one starting statement position of a whole statements is determined, if the starting statement position of the whole statement is not determined from the audio data and/or the subtitle data of the first preset time length acquired currently.

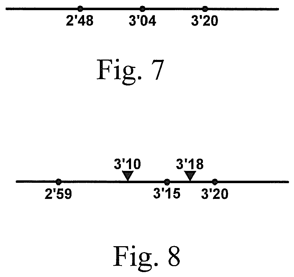

For example, Fig. 7 is a schematic diagram showing a time axis between a pause position and a starting statement position according to an exemplary embodiment. As shown in Fig. 7, when the user plays the video, the pause position is at 3 minutes and 20 seconds, and no starting statement position of the whole statement is obtained according to the obtained audio data and/or the subtitle data of 16 seconds before the pause position, namely, from 3 minutes and 04 seconds to 3 minutes and 20 seconds. Then, the audio data and/or the subtitle data of 16 seconds before 3 minutes and 04 seconds, namely from 2 minutes and 48 seconds to 3 minutes and 04 seconds, may be obtained again and analyzed until at least one starting statement position of a whole statement is determined.

In the alternative solutions, the data for a period of time before the pause position according to the time sequence is acquired and analyzed, and if no starting statement position of a whole statement is obtained, the data of a period of time is acquired forward and analyzed, until a starting statement position is determined as a starting point from which the audio and video continues to be played after paused, so that the user may catch and understand the whole statement when continuing to play the audio and video, the dialogues in the video or the audio are more natural, and the plots are more continuous. Therefore, the user's experience during the playing of the video or audio is improved.

Alternatively, in step S11, a time position before the pause position of the multimedia and spaced from the pause position by a second preset time length is acquired; the audio data and/or the subtitle data within the first preset time length before the time position is acquired.

In step S12, the starting statement position of the whole statement is determined according to the audio data and/or the subtitle data within the first preset time length before the time position.

For example, Fig. 8 is a schematic diagram showing a time axis between a pause position and a starting statement position according to an exemplary embodiment. As shown in Fig. 8, the pause position is at 3 minutes and 20 seconds, the first preset time length is 16 seconds, the second preset time length is 5 seconds, the audio data and/or the subtitle data of 16 seconds before 3 minutes and 15 seconds, namely from 2 minutes and 59 seconds to 3 minutes and 15 seconds is acquired. The starting statement position obtained by analysis is at 3 minutes and 18 seconds.

In the alternative solutions, a time position for a period of time such as 5 seconds before the pause position may be firstly selected, and is then taken as a starting point for finding a starting statement position of a whole statement backwards, so that the user may obtain more extra time to enter into video plot.

For example, as shown in Fig. 8, two starting statement positions obtained by analysis are at 3 minutes and 10 seconds and 3 minutes and 18 seconds, which are respectively before the above time position (3 minutes and 15 seconds) and between the above time position and the pause position (3 minutes and 20 seconds), both of the two starting statement positions are used as a starting point from which the playing of the audio and video after the pause is continued.

In the alternative solutions, at least one piece of audio data and/or the subtitle data within 16 seconds before the above time position (3 minutes and 15 seconds) may be acquired, and the starting statement position of the whole statement is determined from the acquired audio data and/or the subtitle data within 16 seconds every time a piece of audio data and/or the subtitle data within 16 seconds is acquired, until at least one starting statement position of a whole statement is determined.

In the alternative solutions, when taking the time position for a period of time before the pause position as a starting point for finding a starting statement position of a whole statement backwards, the determined starting statement position may be before the time position, and may also be between the time position and the pause position. Therefore, the selection of the starting point for continuing to play the audio and video after pause is more flexible, so that the user may catch and understand the whole statement when continuing to play the audio and video, the dialogues in the video or the audio are more natural, and the plots are more continuous. Therefore, the user's experience during the playing of the video or audio is improved.

Hereinafter, two specific examples will be respectively listed to describe the method of playing multimedia of the present disclosure.

### A First Embodiment

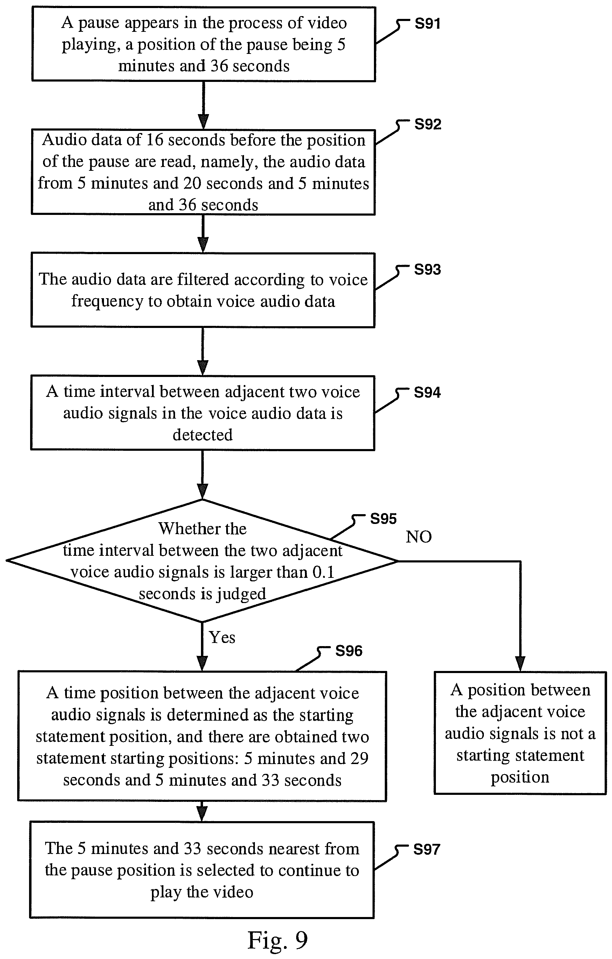

Fig. 9 is a flow chart showing a method of playing multimedia according to an exemplary embodiment. As shown in Fig. 9, the method comprises the following steps.

In step S91, a pause occurs during the process of playing a video, and the position of the pause is at 5 minutes and 36 seconds.

In step S92, audio data of 16 seconds before the position of the pause namely, the audio data between 5 minutes and 20 seconds and 5 minutes and 36 seconds are read.

In step S93, the audio data are filtered according to voice frequency to obtain voice audio data.

In step S94, a time interval between two adjacent voice audio signals in the voice audio data is detected.

In step S95, whether the time interval between the adjacent two voice audio signals is larger than 0.1 seconds is judged; if yes, the process proceeds to step S96; if no, a position between the adjacent voice audio signals is not a starting statement position.

In step S96, a time position between the adjacent voice audio signals is determined as the starting statement position, and there two starting statement positions are obtained: 5 minutes and 29 seconds and 5 minutes and 33 seconds.

In step S97, the 5 minutes and 33 seconds starting statement position, closest to the pause position, is selected to continue to play the video.

### A Second Embodiment

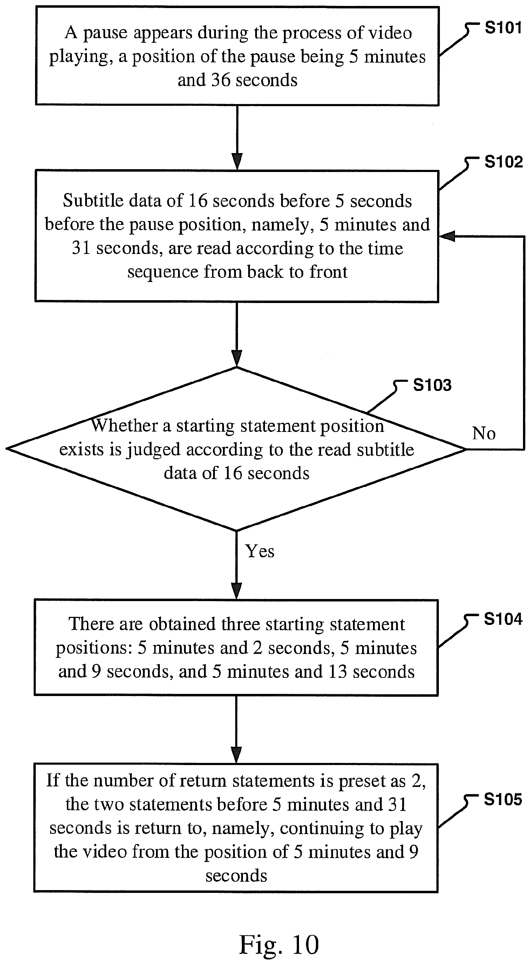

Fig. 10 is a flow chart showing a method of playing multimedia according to an exemplary embodiment. As shown in Fig. 10, the method comprises the following steps.

In step S101, a pause occurs during the process of video playing, and a pause position is 5 minutes and 36 seconds.

In step S102, subtitle data of 16 seconds before 5 seconds before the pause position (namely, 5 minutes and 31 seconds) are read.

In step S103, whether there is a starting statement position is judged according to the read subtitle data of 16 seconds; if yes, the process proceeds to step S104, if no, the process returns to step S102 of reading the subtitle data of 16 seconds before 5 minutes and 15 seconds.

In step S104, there are obtained three starting statement positions: 5 minutes and 02 seconds, 5 minutes and 09 seconds, and 5 minutes and 13 seconds.

In step S105, if a number of return statements is preset as 2, the video is backed to the position (namely 5 minutes and 09 seconds) of the two statements before 5 minutes and 31 seconds, and then continues to be played at the position.

In the above specific examples, the audio and the video may continue to be played flexibly according to the determined starting statement position by analyzing the audio data and/or the subtitle data, so that the user may catch and understand a whole statement when continuing to play the audio and the video after pausing, the dialogues in the video or the audio are more natural, and the plots are more continuous. Therefore, the user's experience during the playing of the video or audio is improved.

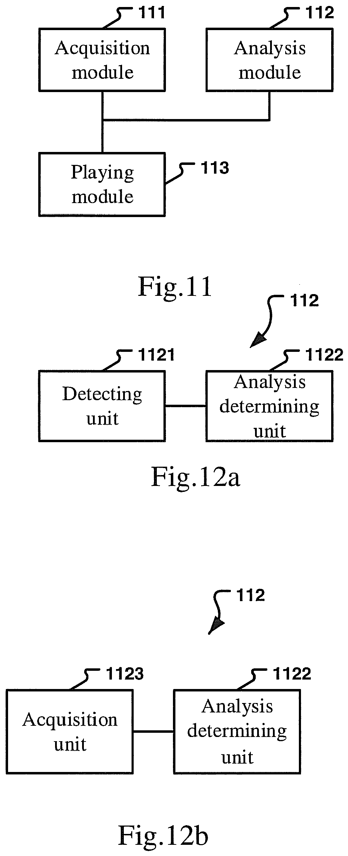

Fig. 11 is a block diagram showing a device of playing multimedia according to an exemplary embodiment. Referring to Fig. 11, the device comprises an acquisition module 111, an analysis module 112, and a playing module 113.

The acquisition module 111 is configured to acquire audio data and/or subtitle data of a first preset time length before a pause position of a multimedia.

The analysis module 112 is configured to determine a starting statement position of a whole statement according to the audio data and/or the subtitle data acquired by the acquisition module.

The playing module 113 is configured to continue to play the multimedia according to the starting statement position determined by the analysis module when an instruction of continuing to play the multimedia is detected or a condition of continuing to play the multimedia is met.

Fig. 12a is a block diagram showing an analysis module according to an exemplary embodiment. As shown in Fig. 12a, alternatively, the analysis module 112 comprises: a detecting unit 1121 and an analysis determining unit 1122.

The detecting unit 1121 is configured to detect a time interval between two adjacent audio signals in the audio data acquired by the acquisition module 111.

The analysis determining unit 1122 is configured to determine a time position between the two adjacent audio signals as the starting statement position when the time interval between the two adjacent audio signals detected by the detecting unit 1121 is larger than a first preset interval.

Fig. 12b is a block diagram showing an analysis module according to an exemplary embodiment. As shown in Fig. 12b, alternatively, the analysis module 112 comprises: an acquisition unit 1123 and an analysis determining unit 1122.

The acquisition unit 1123 is configured to acquire an initial display time and/or an end display time of each subtitle in the subtitle data acquired by the acquisition module 111.

The analysis determining unit 1122 is configured to determine the starting statement position according to the initial display time and/or the end display time of the subtitle acquired by the acquisition unit 1123.

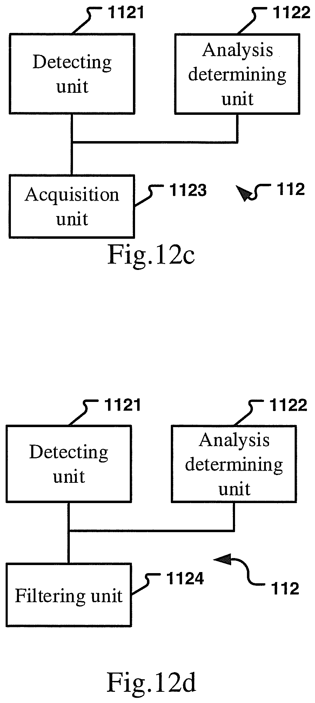

Fig. 12c is a block diagram showing an analysis module according to an exemplary embodiment. As shown in Fig. 12c, alternatively, the analysis module 112 comprises: a detecting unit 1121, an acquisition unit 1123 and an analysis determining unit 1122.

The detecting unit 1121 is configured to detect a playing time of each audio signal of the audio data acquired by the acquisition module 111.

The acquisition unit 1123 is configured to acquire an initial display time and/or an end display time of the subtitle corresponding to the adjacent audio signals when a time interval between adjacent two audio signals detected by the detecting unit 1121 is larger than a first preset interval.

The analysis determining unit 1122 is configured to determine the starting statement position according to the playing time of the two adjacent audio signals and the initial display time and/or the end display time of the subtitle corresponding to the adjacent audio signals acquired by the acquisition unit 1123.

Fig. 12d is a block diagram showing an analysis module according to an exemplary embodiment. As shown in Fig. 12d, alternatively, the analysis module 112 further comprises: a filtering unit 1124.

The filtering unit 1124 is configured to filter the audio data acquired by the acquisition module 111 according to voice frequency to obtain voice audio data.

The detecting unit 1121 is configured to detect a time interval between two adjacent voice audio signals in the voice audio data filtered by the filtering unit 1124.

The analysis determining unit 1122 is configured to determine a time positions between the two adjacent voice audio signals as the starting statement position when the time interval between the two adjacent voice audio signals detected by the detecting unit 1121 is larger than the first preset interval.

Alternatively, when the starting statement positions of at least two whole statements are determined by the analysis module 112, the playing module 113 is configured to continue to play the multimedia from the starting statement position closest to the pause position; or to continue to play the multimedia from the Nth starting statement position before the pause position when a number of return statements is preset as N, where N is an integer greater than or equal to 2.

Alternatively, when the starting statement position of the whole statement is not determined by the analysis module 112 according to the audio data and/or the subtitle data within the first preset time length before the pause position of the multimedia, the acquisition module 111 is configured to acquire the audio data and/or the subtitle data of the first preset time length, wherein a playing time of the audio data and/or the subtitle data of a first preset time length acquired currently is located before the playing time of the audio data and/or the subtitle data of the first preset time length previously acquired, and.

the analysis module 112 is configured to determine the starting statement position of the whole statement from the audio data and/or the subtitle data of the first preset time length currently acquired by the acquisition module 111, and to continue to acquire the audio data and/or the subtitle data of the first preset time length and determine the starting statement position of the whole statement until at least one starting statement position of a whole statements is determined, if the starting statement position of the whole statement is not determined from the audio data and/or the subtitle data of the first preset time length acquired currently.

Alternatively, the acquisition module 111 is configured to acquire a time position located before the pause position of the multimedia and spaced from the pause position at a second preset time length; and is configure to acquire the audio data and/or the subtitle data within the first preset time length before the time position.

The analysis module 112 is configured to determine the starting statement position of the whole statement according to the audio data and/or the subtitle data within the first preset time length before the time position.

With respect to the device in the above embodiments, specific operations performed by each module have been described in detail in the embodiments of related method, and detailed description will not be repeated here.

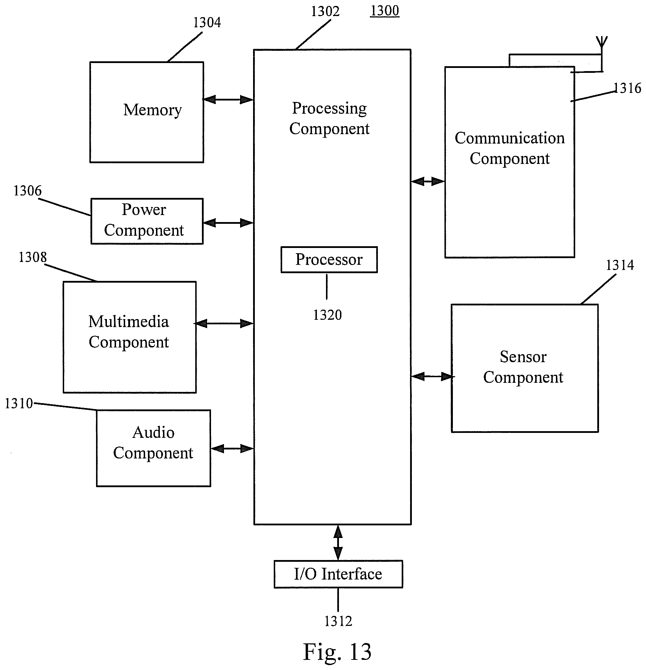

Fig. 13 is a block diagram showing a device 1300 of playing multimedia according to an exemplary embodiment. For example, the device 1300 may be a mobile phone, a computer, a digital broadcast terminal, a messaging device, a gaming console, a tablet, a medical device, exercise equipment, a personal digital assistant and the like.

Referring to Fig. 13, the device 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 usually controls overall operations of the device 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the device 1300. Examples of such data include instructions for any application or method operated on the device 1300, contact data, phonebook data, messages, pictures, videos, etc. The memory 1304 may be implemented using any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the device 1300. The power component 1306 may include a power management system, one or more power sources, and other components associated with the generation, management, and distribution of power in the device 1300.

The multimedia component 1308 includes a screen providing an output interface between the device 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 1308 includes a front camera and/or a rear camera. The front camera and/or the rear camera may receive an external multimedia datum while the device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone (MIC) configured to receive an external audio signal when the device 1300 is in an operation mode, such as a call mode, a recording mode, and a voice identification mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, a button, and the like. The button may include, but not limited to, a home button, a volume button, a starting button, and a locking button.

The sensor component 1314 includes one or more sensors to provide status assessments of various aspects of the device 1300. For instance, the sensor component 1314 may detect an open/closed status of the device 1300, relative positioning of components, e.g., the display and the keyboard, of the device 1300, a change in position of the device 1300 or a component of the device 1300, a presence or absence of user contact with the device 1300, an orientation or an acceleration/deceleration of the device 1300, and a change in temperature of the device 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the device 1300 and other devices. The device 1300 can access a wireless network based on a communication standard, such as WiFi, 2G, or 3G, or a combination thereof. In one exemplary embodiment, the communication component 1316 receives a broadcast signal or broadcast associated information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above method.

In exemplary embodiments, there is also provided a non-transitory computer readable storage medium including instructions, such as included in the memory 1304, executable by the processor 1320 in the device 1300, for performing the above method. For example, the non-transitory computer-readable storage medium may be a ROM, a random access memory (RAM), a CD-ROM, a magnetic tape, a floppy disc, an optical data storage device, and the like.

A non-transitory computer readable storage medium, when instructions in the storage medium are executed by the processor of a mobile terminal, the mobile terminal may execute a method of playing multimedia, the method comprises:
acquiring audio data and/or subtitle data of a first preset time length before a pause position of a multimedia;
determining a starting statement position of a whole statement according to the audio data and/or the subtitle data; and
continuing to play the multimedia according to the starting statement position when an instruction of continuing to play the multimedia is detected or a condition of continuing to play the multimedia is met.

Alternatively, the step of determining the starting statement position of the whole statement according to the audio data comprises:
detecting a time interval between two adjacent audio signals in the audio data; and
determining a time position between the two adjacent audio signals as the starting statement position when the time interval between the two adjacent audio signals is larger than a first preset interval.

Alternatively, the step of determining the starting statement position of the whole statement according to the subtitle data comprises:
acquiring an initial display time and/or an end display time of each subtitle in the subtitle data; and
determining the starting statement position according to the initial display time and/or the end display time of the subtitle.

Alternatively, the step of determining the starting statement position of the whole statement according to the audio data and the subtitle data comprises:
detecting a playing time of each audio signal of the audio data;
acquiring an initial display time and/or an end display time of a subtitle corresponding to the adjacent audio signals when a time interval between two adjacent audio signals is larger than a first preset interval; and
determining the starting statement position according to the playing time of the two adjacent audio signals and the initial display time and/or the end display time of the subtitle corresponding to the adjacent audio signals.

Alternatively, the step of determining the starting statement position of the whole statement according to the audio data comprises:
filtering the audio data according to voice frequency to obtain voice audio data;
detecting a time interval between two adjacent voice audio signals in the voice audio data; and
determining a time position between the two adjacent voice audio signals as the starting statement position when the time interval between adjacent two voice audio signals is larger than the first preset interval.

Alternatively, when the starting statement positions of at least two whole statements are determined according to the audio data and/or the subtitle data, the step of continuing to play the multimedia according to the starting statement position comprises:
continuing to play the multimedia from the starting statement position closest to the pause position; or
continuing to play the multimedia from the N^{th} starting statement position before the pause position when a number of return statements is preset as N, where N is an integer greater than or equal to 2.

Alternatively, when the starting statement position of the whole statement is not determined according to the audio data and/or the subtitle data within the first preset time length before the pause position of the multimedia, the method further comprises:
acquiring the audio data and/or the subtitle data of the first preset time length, wherein a playing time of the audio data and/or the subtitle data of the first preset time length acquired currently is located before a playing time of the audio data and/or the subtitle data of the first preset time length previously acquired;
determining the starting statement position of the whole statement from the audio data and/or the subtitle data of the first preset time length acquired currently; and
continuing to acquire the audio data and/or the subtitle data of the first preset time length and determining the starting statement position of the whole statement until at least one starting statement position of a whole statements is determined, if the starting statement position of the whole statement is not determined from the audio data and/or the subtitle data of the first preset time length acquired currently.

Alternatively, the step of acquiring the audio data and/or the subtitle data within the first preset time length before the pause position of the multimedia comprises:
acquiring a time position located before the pause position of the multimedia and spaced from the pause position at a second preset time length;
acquiring the audio data and/or the subtitle data within the first preset time length before the time position; and
the step of determining the starting statement position of the whole statement according to the audio data and/or the subtitle data comprises:
determining the starting statement position of the whole statement according to the audio data and/or the subtitle data within the first preset time length before the time position.

After considering this description and carrying out the embodiments disclosed herein, those skilled in the art may easily anticipate other implementations of the present disclosure. The present disclosure is meant to cover any variations, usage or adaptive change of these embodiments, and these variations, usage or adaptive change follow general concept of the present disclosure and include the common knowledge or the customary technical means in the technical field that is not disclosed in the present disclosure. The description and embodiments are only exemplary, and the real range of the present disclosure are defined by the following claims.

It should be understood that the present disclosure is not limited to precise structures that are described above and shown in the accompanying drawings, and may be modified and changed without departing from the range of the present disclosure. The scope of the present disclosure is only defined by the appended claims.

## Claims

1. A method of playing multimedia, the method comprising:
acquiring (S11) audio data and subtitle data of a first preset time length before a pause position of a multimedia;
determining (S12) a starting statement position of a whole statement according to the audio data and the subtitle data; and
continuing (S13) to play the multimedia according to the starting statement position when an instruction of continuing to play the multimedia is detected or a condition of continuing to play the multimedia is met,
**characterized in that** the step (S12) of determining the starting statement position of the whole statement according to the audio data and the subtitle data comprises:
filtering (S61) the audio data according to voice frequency to obtain voice audio data;
detecting (S62) a time interval between two adjacent voice audio signals in the voice audio data;
acquiring (S52) an initial display time and an end display time of two adjacent subtitles corresponding to the adjacent voice audio signals when the time interval between two adjacent voice audio signals is larger than a first preset interval;
determining whether the time interval between the two adjacent subtitles, which is obtained from the initial display time and the end display time of the two adjacent subtitles, is also larger than the first preset interval; and if the time interval between the two adjacent subtitles is larger than the first present interval, then determining (S53) the starting statement position according to a playing time of the two adjacent voice audio signals and the initial display time and the end display time of the subtitle corresponding to the adjacent voice audio signals at a position where the time interval between two adjacent voice audio signals and the time interval between two adjacent subtitles overlap.

2. The method according to claim 1, wherein when the starting statement positions of at least two whole statements are determined according to the audio data and the subtitle data, the step (S13) of continuing to play the multimedia according to the starting statement position comprises:
continuing to play the multimedia from the starting statement position closest to the pause position; or
continuing to play the multimedia from the N^{th} starting statement position before the pause position when a number of return statements is preset as N, where N is an integer greater than or equal to 2.

3. The method according to any one of claims 1 or 2,
wherein when the starting statement position of the whole statement is not determined according to the audio data and the subtitle data within the first preset time length before the pause position of the multimedia, the method further comprises:
acquiring the audio data and the subtitle data of the first preset time length, wherein a playing time of the audio data and the subtitle data of the first preset time length acquired currently is before a playing time of the audio data and the subtitle data of the first preset time length previously acquired;
determining the starting statement position of the whole statement from the audio data and the subtitle data of the first preset time length acquired currently; and
continuing to acquire the audio data and the subtitle data of the first preset time length and determining the starting statement position of the whole statement until at least one starting statement position of a whole statements is determined, if the starting statement position of the whole statement is not determined from the audio data and the subtitle data of the first preset time length acquired currently.

4. The method according to claim 1, wherein the step (S11) of acquiring the audio data and the subtitle data within the first preset time length before the pause position of the multimedia comprises:
acquiring a time position located before the pause position of the multimedia and spaced from the pause position by a second preset time length;
acquiring the audio data and the subtitle data within the first preset time length before the time position; and
the step of determining the starting statement position of the whole statement according to the audio data and the subtitle data comprises:
determining the starting statement position of the whole statement according to the audio data and the subtitle data within the first preset time length before the time position.

5. A device of playing multimedia, comprising:
an acquisition module (111) configured to acquire audio data and subtitle data of a first preset time length before a pause position of a multimedia;
an analysis module (112) configured to determine a starting statement position of a whole statement according to the audio data and the subtitle data acquired by the acquisition module; and
a playing module (113) configured to continue to play the multimedia according to the starting statement position determined by the analysis module when an instruction of continuing to play the multimedia is detected or a condition of continuing to play the multimedia is met,
**characterized in that** the analysis module (112) comprises:
a filtering unit (1124) configured to filter the audio data according to voice frequency to obtain voice audio data;
a detecting unit (1121) configured to detect a time interval between two adjacent voice audio signals in the voice audio data;
an acquisition unit (1123) configured to acquire an initial display time and an end display time of two adjacent subtitles corresponding to the adjacent voice audio signals, when the time interval between two adjacent voice audio signals detected by the detecting unit is larger than a first preset interval; and an analysis determining unit (1122) configured to determine whether the time interval between the two adjacent subtitles, which is obtained from the initial display time and the end display time of the two adjacent subtitles, is also larger than the first preset interval, and, if the time interval between the two adjacent subtitles is larger than the first present interval, then configured to determine the starting statement position according to a playing time of the two adjacent voice audio signals and the initial display time and the end display time of the subtitle corresponding to the adjacent voice audio signals acquired by the acquisition unit, at a position where the time interval between two adjacent voice audio signals and the time interval between two adjacent subtitles overlap.

6. The device according to claim 5, wherein, when the starting statement positions of at least two whole statements are determined by the analysis module (112), the playing module (113) is configured
- to continue to play the multimedia from the starting statement position closest to the pause position; or
- to continue to play the multimedia from the Nth starting statement position before the pause position when a number of return statements is preset as N, where N is an integer greater than or equal to 2.

7. The device according to claim 5 or 6, wherein, when the starting statement position of the whole statement is not determined by the analysis module (112) according to the audio data and the subtitle data within the first preset time length before the pause position of the multimedia,
the acquisition module (111) is configured to acquire the audio data and the subtitle data of the first preset time length, wherein a playing time of the audio data and the subtitle data of a first preset time length acquired currently is before the playing time of the audio data and the subtitle data of the first preset time length previously acquired; and
the analysis module (112) is configured to determine the starting statement position of the whole statement from the audio data and the subtitle data of the first preset time length currently acquired by the acquisition module (111); and to continue to acquire the audio data and the subtitle data of the first preset time length and determining the starting statement position of the whole statement until at least one starting statement position of a whole statements is determined, if the starting statement position of the whole statement is not determined from the audio data and the subtitle data of the first preset time length acquired currently.

8. The device according to claim 5, wherein
the acquisition module (111) is configured to acquire a time position before the pause position of the multimedia and spaced from the pause position at a second preset time length; and is configured to acquire the audio data and the subtitle data within the first preset time length before the time position; and
the analysis module (112) is configured to determine the starting statement position of the whole statement according to the audio data and the subtitle data within the first preset time length before the time position.

9. A computer program, including instructions for executing the steps of a method of playing multimedia according to any one of claims 1 to 4 when said program is executed by a computer.

10. A recording medium readable by a computer and having recorded thereon a computer program including instructions for executing the steps of a method of playing multimedia according to any one of claims 1 to 4.

## Patentansprüche

1. Verfahren zum Abspielen von Multimedia, das Verfahren umfassend:
Erhalten (S11) von Audiodaten und Untertiteldaten einer ersten vorab festgelegten Zeitlänge vor einer Pausenposition eines Multimedias,
Bestimmen (S12) einer Startaussageposition einer Gesamtaussage gemäß den Audiodaten und den Untertiteldaten, und
Fortsetzen (S13) des Abspielens des Multimedias gemäß der Startaussageposition, wenn ein Befehl des Fortsetzens des Abspielens des Multimedias erkannt wird oder eine Bedingung des Fortsetzens des Abspielens des Multimedias erfüllt wird,
**dadurch gekennzeichnet, dass** der Schritt (S12) des Bestimmens der Startaussageposition der Gesamtaussage gemäß den Audiodaten und den Untertiteldaten umfasst:
Filtern (S61) der Audiodaten gemäß der Sprachfrequenz, um Sprachaudiodaten zu erhalten,
Erkennen (S62) eines Zeitraums zwischen zwei benachbarten Sprachaudiosignalen in den Sprachaudiodaten,
Erfassen (S52) einer Anfangsanzeigezeit und einer Endanzeigezeit von zwei benachbarten Untertiteln entsprechend den benachbarten Sprachaudiosignalen, wenn der Zeitraum zwischen zwei benachbarten Sprachaudiosignalen größer als ein erster vorab festgelegter Zeitraum ist, Bestimmen, ob der Zeitraum zwischen den beiden benachbarten Untertiteln, welcher anhand der Anfangsanzeigezeit und der Endanzeigezeit der beiden benachbarten Untertitel erhalten wird, auch größer als der erste vorab festgelegte Zeitraum ist, und wenn der Zeitraum zwischen den beiden benachbarten Untertiteln größer als der erste vorhandene Zeitraum ist, dann Bestimmen (S53) der Startaussageposition gemäß einer Abspielzeit der beiden benachbarten Sprachaudiosignale und der Anfangsanzeigezeit und der Endanzeigezeit des Untertitels entsprechend den benachbarten Sprachaudiosignalen in einer Position, wo sich der Zeitraum zwischen zwei benachbarten Sprachaudiosignalen und der Zeitraum zwischen zwei benachbarten Untertiteln überlagern.

2. Verfahren nach Anspruch 1, wobei, wenn die Startaussagepositionen von mindestens zwei Gesamtaussagen gemäß den Audiodaten und den Untertiteldaten bestimmt werden, der Schritt (S13) des Fortsetzens des Abspielens des Multimedias gemäß der Startaussageposition umfasst:
Fortsetzen des Abspielens des Multimedias von der Startaussageposition, die am nächsten bei der Pausenposition liegt, oder
Fortsetzen des Abspielens des Multimedias von der N-ten Startaussageposition vor der Pausenposition, wenn eine Anzahl an Rückkehraussagen als N vorab festgelegt ist, wobei N eine ganze Zahl ist, die größer als oder gleich 2 ist.

3. Verfahren nach einem der Ansprüche 1 oder 2,
wobei, wenn die Startaussageposition der Gesamtaussage nicht gemäß den Audiodaten und den Untertiteldaten innerhalb der ersten vorab festgelegten Zeitlänge vor der Pausenposition des Multimedias bestimmt wird, das Verfahren ferner umfasst:
Erfassen der Audiodaten und der Untertiteldaten der ersten vorab festgelegten Zeitlänge, wobei eine Abspielzeit der Audiodaten und der Untertiteldaten der ersten vorab festgelegten Zeitlänge, die aktuell erfasst wird, vor einer Abspielzeit der Audiodaten und der Untertiteldaten der ersten vorab festgelegten Zeitlänge, die zuvor erfasst wurde, liegt,
Bestimmen der Startaussageposition der Gesamtaussage anhand der Audiodaten und der Untertiteldaten der ersten vorab festgelegten Zeitlänge, die aktuell erfasst wird, und
Fortsetzen des Erfassens der Audiodaten und der Untertiteldaten der ersten vorab festgelegten Zeitlänge und Bestimmen der Startaussageposition der Gesamtaussage, bis mindestens eine Startaussageposition einer Gesamtaussage bestimmt ist, wenn die Startaussageposition der Gesamtaussage nicht anhand der Audiodaten und der Untertiteldaten der ersten vorab festgelegten Zeitlänge, die aktuell erfasst wird, bestimmt wird.

4. Verfahren nach Anspruch 1, wobei der Schritt (S11) des Erfassens der Audiodaten und der Untertiteldaten innerhalb der ersten vorab festgelegten Zeitlänge vor der Pausenposition des Multimedias umfasst:
Erfassen einer Zeitposition, die vor der Pausenposition des Multimedias liegt und von der Pausenposition um eine zweite vorab festgelegte Zeitlänge beabstandet ist,
Erfassen der Audiodaten und der Untertiteldaten innerhalb der ersten vorab festgelegten Zeitlänge vor der Zeitposition, und
der Schritt des Bestimmens der Startaussageposition der Gesamtaussage gemäß den Audiodaten und den Untertiteldaten umfasst:
Bestimmen der Startaussageposition der Gesamtaussage gemäß den Audiodaten und den Untertiteldaten innerhalb der ersten vorab festgelegten Zeitlänge vor der Zeitposition.

5. Vorrichtung zum Abspielen von Multimedia, umfassend:
ein Erfassungsmodul (111), das konfiguriert ist, um Audiodaten und Untertiteldaten einer ersten vorab festgelegten Zeitlänge vor einer Pausenposition eines Multimedias zu erfassen,
ein Analysemodul (112), das konfiguriert ist, um eine Startaussageposition einer Gesamtaussage gemäß den Audiodaten und den Untertiteldaten, die durch das Erfassungsmodul erfasst werden, zu bestimmen, und
ein Abspielmodul (113), das konfiguriert ist, um das Abspielen des Multimedias gemäß der Startaussageposition, die durch das Analysemodul bestimmt wird, fortzusetzen, wenn ein Befehl des Fortsetzens des Abspielens des Multimedias erkannt oder eine Bedingung des Fortsetzens des Abspielens des Multimedias erfüllt wird,
**dadurch gekennzeichnet, dass** das Analysemodul (112) umfasst:
eine Filtereinheit (1124), die konfiguriert ist, um die Audiodaten gemäß der Sprachfrequenz zu filtern, um Sprachaudiodaten zu erhalten,
eine Erkennungseinheit (1121), die konfiguriert ist, um einen Zeitraum zwischen zwei benachbarten Sprachaudiosignalen in den Sprachaudiodaten zu erkennen,
eine Erfassungseinheit (1123), die konfiguriert ist, um eine Anfangsanzeigezeit und eine Endanzeigezeit von zwei benachbarten Untertiteln entsprechend den benachbarten Sprachaudiosignalen zu erfassen, wenn der Zeitraum zwischen zwei benachbarten Sprachaudiosignalen, der von der Erkennungseinheit erkannt wird, größer als ein erster vorab festgelegter Zeitraum ist, und eine Analysebestimmungseinheit (1122), die konfiguriert ist, um zu bestimmen, ob der Zeitraum zwischen den beiden benachbarten Untertiteln, welcher anhand der Anfangsanzeigezeit und der Endanzeigezeit der beiden benachbarten Untertitel erhalten wird, auch größer als der erste vorab festgelegte Zeitraum ist, und, wenn der Zeitraum zwischen den beiden benachbarten Untertiteln größer als der erste vorhandene Zeitraum ist, dann konfiguriert ist, um die Startaussageposition gemäß einer Abspielzeit der beiden benachbarten Sprachaudiosignale und der Anfangsanzeigezeit und der Endanzeigezeit des Untertitels entsprechend den benachbarten Sprachaudiosignalen, die durch die Erfassungseinheit erfasst werden, in einer Position, wo sich der Zeitraum zwischen zwei benachbarten Sprachaudiosignalen und der Zeitraum zwischen zwei benachbarten Untertiteln überlagern, zu bestimmen.

6. Vorrichtung nach Anspruch 5, wobei, wenn die Startaussagepositionen von mindestens zwei Gesamtaussagen durch das Analysemodul (112) bestimmt werden, das Abspielmodul (113) konfiguriert ist,
- um das Abspielen des Multimedias von der Startaussageposition, die am nächsten bei der Pausenposition liegt, fortzusetzen, oder
- um das Abspielen des Multimedias von der N-ten Startaussageposition vor der Pausenposition, wenn eine Anzahl an Rückkehraussagen als N vorab festgelegt ist, fortzusetzen, wobei N eine ganze Zahl ist, die größer als oder gleich 2 ist.

7. Vorrichtung nach Anspruch 5 oder 6, wobei, wenn die Startaussageposition der Gesamtaussage nicht durch das Analysemodul (112) gemäß den Audiodaten und den Untertiteldaten innerhalb der ersten vorab festgelegten Zeitlänge vor der Pausenposition des Multimedias bestimmt wird,
das Erfassungsmodul (111) konfiguriert ist, um die Audiodaten und die Untertiteldaten der ersten vorab festgelegten Zeitlänge zu erfassen, wobei eine Abspielzeit der Audiodaten und der Untertiteldaten einer ersten vorab festgelegten Zeitlänge, die aktuell erfasst wird, vor der Abspielzeit der Audiodaten und der Untertiteldaten der ersten vorab festgelegten Zeitlänge, die zuvor erfasst wurde, liegt, und
das Analysemodul (112) konfiguriert ist, um die Startaussageposition der Gesamtaussage anhand der Audiodaten und der Untertiteldaten der ersten vorab festgelegten Zeitlänge, die aktuell durch das Erfassungsmodul (111) erfasst werden, zu bestimmen, und das Erfassen der Audiodaten und der Untertiteldaten der ersten vorab festgelegten Zeitlänge fortzusetzen und die Startaussageposition der Gesamtaussage zu bestimmen, bis mindestens eine Startaussageposition einer Gesamtaussage bestimmt ist, wenn die Startaussageposition der Gesamtaussage nicht anhand der Audiodaten und der Untertiteldaten der ersten vorab festgelegten Zeitlänge, die aktuell erfasst wird, bestimmt wird.

8. Vorrichtung nach Anspruch 5, wobei
das Erfassungsmodul (111) konfiguriert ist, um eine Zeitposition vor der Pausenposition des Multimedias und von der Pausenposition um eine zweite vorab festgelegte Zeitlänge beabstandet zu erfassen, und konfiguriert ist, um die Audiodaten und die Untertiteldaten innerhalb der ersten vorab festgelegten Zeitlänge vor der Zeitposition zu erfassen, und
das Analysemodul (112) konfiguriert ist, um die Startaussageposition der Gesamtaussage gemäß den Audiodaten und den Untertiteldaten innerhalb der ersten vorab festgelegten Zeitlänge vor der Zeitposition zu bestimmen.

9. Computerprogramm, das Befehle zum Ausführen der Schritte eines Verfahrens zum Abspielen von Multimedia nach einem der Ansprüche 1 bis 4 beinhaltet, wenn das Programm von einem Computer ausgeführt wird.

10. Aufzeichnungsmedium, das von einem Computer lesbar ist und auf dem ein Computerprogramm aufgezeichnet ist, das Befehle zum Ausführen der Schritte eines Verfahrens zum Abspielen von Multimedia nach einem der Ansprüche 1 bis 4 beinhaltet.

## Revendications

1. Procédé de lecture d'un contenu multimédia, le procédé comprenant les étapes ci-dessous consistant à :
acquérir (S11) des données audio et des données de sous-titres d'une première durée prédéfinie avant une position de pause d'un contenu multimédia ;
déterminer (S12) une position d'énoncé de départ d'un énoncé complet selon les données audio et les données de sous-titres ; et
poursuivre (S13) la lecture du contenu multimédia selon la position d'énoncé de départ lorsqu'une instruction visant à poursuivre la lecture du contenu multimédia est détectée, ou lorsqu'une condition de poursuite de la lecture du contenu multimédia est satisfaite ;
**caractérisé en ce que** l'étape (S12) consistant à déterminer la position d'énoncé de départ de l'énoncé complet selon les données audio et les données de sous-titres comprend les étapes ci-dessous consistant à :
filtrer (S61) les données audio selon une fréquence vocale en vue d'obtenir des données audio vocales ;
détecter (S62) un intervalle de temps entre deux signaux audio vocaux adjacents dans les données audio vocales ;
acquérir (S52) un temps d'affichage initial et un temps d'affichage final de deux sous-titres adjacents correspondant aux signaux audio vocaux adjacents lorsque l'intervalle de temps entre deux signaux audio vocaux adjacents est supérieur à un premier intervalle prédéfini ; déterminer si l'intervalle de temps entre les deux sous-titres adjacents, lequel est obtenu à partir du temps d'affichage initial et du temps d'affichage final des deux sous-titres adjacents, est également supérieur au premier intervalle prédéfini ; et si l'intervalle de temps entre les deux sous-titres adjacents est supérieur au premier intervalle prédéfini, déterminer ensuite (S53) la position d'énoncé de départ selon un temps de lecture des deux signaux audio vocaux adjacents et le temps d'affichage initial et le temps d'affichage final du sous-titre correspondant aux signaux audio vocaux adjacents à une position où l'intervalle de temps entre deux signaux audio vocaux adjacents et l'intervalle de temps entre deux sous-titres adjacents se chevauchent.

2. Procédé selon la revendication 1, dans lequel, lorsque les positions d'énoncés de départ d'au moins deux énoncés complets sont déterminées selon les données audio et les données de sous-titres, l'étape (S13) de poursuite de la lecture du contenu multimédia selon la position d'énoncé de départ comprend les étapes ci-dessous consistant à :
poursuivre la lecture du contenu multimédia à partir de la position d'énoncé de départ la plus proche de la position de pause ; ou
poursuivre la lecture du contenu multimédia à partir de la N^{ième} position d'énoncé de départ avant la position de pause lorsqu'un nombre d'énoncés de retour est prédéfini comme correspondant à « N », où « N » est un nombre entier supérieur ou égal à 2.

3. Procédé selon l'une quelconque des revendications 1 et 2,
dans lequel, lorsque la position d'énoncé de départ de l'énoncé complet n'est pas déterminée selon les données audio et les données de sous-titres au cours de la première durée prédéfinie avant la position de pause du contenu multimédia, le procédé comprend en outre les étapes ci-dessous consistant à :
acquérir les données audio et les données de sous-titres de la première durée prédéfinie, dans lequel un temps de lecture des données audio et des données de sous-titres de la première durée prédéfinie acquises actuellement est antérieur à un temps de lecture des données audio et des données de sous-titres de la première durée prédéfinie acquises précédemment ;
déterminer la position d'énoncé de départ de l'énoncé complet à partir des données audio et des données de sous-titres de la première durée prédéfinie acquises actuellement ; et
continuer à acquérir les données audio et les données de sous-titres de la première durée prédéfinie et déterminer la position d'énoncé de départ de l'énoncé complet jusqu'à ce qu'au moins une position d'énoncé de départ d'un énoncé complet soit déterminée, si la position d'énoncé de départ de l'énoncé complet n'est pas déterminée à partir des données audio et des données de sous-titres de la première durée prédéfinie actuellement acquises.

4. Procédé selon la revendication 1, dans lequel l'étape (S11) d'acquisition des données audio et des données de sous-titres au cours de la première durée prédéfinie avant la position de pause du contenu multimédia comprend les étapes ci-dessous consistant à :
acquérir une position temporelle située avant la position de pause du contenu multimédia et espacée de la position de pause d'une seconde durée prédéfinie ;
acquérir les données audio et les données de sous-titres au cours de la première durée prédéfinie avant la position temporelle ; et
dans lequel l'étape de détermination de la position d'énoncé de départ de l'énoncé complet selon les données audio et les données de sous-titres consiste à :
déterminer la position d'énoncé de départ de l'énoncé complet selon les données audio et les données de sous-titres au cours de la première durée prédéfinie avant la position temporelle.

5. Dispositif de lecture de contenu multimédia, comprenant :
un module d'acquisition (111) configuré de manière à acquérir des données audio et des données de sous-titres d'une première durée prédéfinie avant une position de pause d'un contenu multimédia ;
un module d'analyse (112) configuré de manière à déterminer une position d'énoncé de départ d'un énoncé complet selon les données audio et les données de sous-titres acquises par le module d'acquisition ; et
un module de lecture (113) configuré de manière à poursuivre la lecture du contenu multimédia selon la position d'énoncé de départ déterminée par le module d'analyse lorsqu'une instruction visant à poursuivre la lecture du contenu multimédia est détectée, ou lorsqu'une condition de poursuite de la lecture du contenu multimédia est satisfaite ;
**caractérisé en ce que** le module d'analyse (112) comprend :
une unité de filtrage (1124) configurée de manière à filtrer les données audio selon une fréquence vocale en vue d'obtenir des données audio vocales ;
une unité de détection (1121) configurée de manière à détecter un intervalle de temps entre deux signaux audio vocaux adjacents dans les données audio vocales ;
une unité d'acquisition (1123) configurée de manière à acquérir un temps d'affichage initial et un temps d'affichage final de deux sous-titres adjacents correspondant aux signaux audio vocaux adjacents, lorsque l'intervalle de temps entre deux signaux audio vocaux adjacents, détecté par l'unité de détection, est supérieur à un premier intervalle prédéfini ; et une unité de détermination d'analyse (1122) configurée de manière à déterminer si l'intervalle de temps entre les deux sous-titres adjacents, lequel est obtenu à partir du temps d'affichage initial et du temps d'affichage final des deux sous-titres adjacents, est également supérieur au premier intervalle prédéfini, et si l'intervalle de temps entre les deux sous-titres adjacents est supérieur au premier intervalle prédéfini, elle est configurée de manière à déterminer ensuite la position d'énoncé de départ selon un temps de lecture des deux signaux audio vocaux adjacents et le temps d'affichage initial et le temps d'affichage final du sous-titre correspondant aux signaux audio vocaux adjacents, acquis par l'unité d'acquisition, à une position où l'intervalle de temps entre deux signaux audio vocaux adjacents et l'intervalle de temps entre deux sous-titres adjacents se chevauchent.

6. Dispositif selon la revendication 5, dans lequel, lorsque les positions d'énoncés de départ d'au moins deux énoncés complets sont déterminées par le module d'analyse (112), le module de lecture (113) est configuré de manière à :
- poursuivre la lecture du contenu multimédia à partir de la position d'énoncé de départ la plus proche de la position de pause ; ou
- poursuivre la lecture du contenu multimédia à partir de la N^{ième} position d'énoncé de départ avant la position de pause lorsqu'un nombre d'énoncés de retour est prédéfini comme correspondant à « N », où « N » est un nombre entier supérieur ou égal à 2.

7. Dispositif selon la revendication 5 ou 6, dans lequel, lorsque la position d'énoncé de départ de l'énoncé complet n'est pas déterminée par le module d'analyse (112) selon les données audio et les données de sous-titres au cours de la première durée prédéfinie avant la position de pause du contenu multimédia ;
le module d'acquisition (111) est configuré de manière à acquérir les données audio et les données de sous-titres de la première durée prédéfinie, dans lequel un temps de lecture des données audio et des données de sous-titres de la première durée prédéfinie acquises actuellement est antérieur au temps de lecture des données audio et des données de sous-titres de la première durée prédéfinie acquises précédemment ;
le module d'analyse (112) est configuré de manière à déterminer la position d'énoncé de départ de l'énoncé complet à partir des données audio et des données de sous-titres de la première durée prédéfinie acquises actuellement par le module d'acquisition (111) ; et à continuer à acquérir les données audio et les données de sous-titres de la première durée prédéfinie et à déterminer la position d'énoncé de départ de l'énoncé complet jusqu'à ce qu'au moins une position d'énoncé de départ d'un énoncé complet soit déterminée, si la position d'énoncé de départ de l'énoncé complet n'est pas déterminée à partir des données audio et des données de sous-titres de la première durée prédéfinie actuellement acquises.

8. Dispositif selon la revendication 5, dans lequel :
le module d'acquisition (111) est configuré de manière à acquérir une position temporelle située avant la position de pause du contenu multimédia et espacée de la position de pause, au cours d'une seconde durée prédéfinie ; et il est configuré de manière à acquérir les données audio et les données de sous-titres au cours de la première durée prédéfinie avant la position temporelle ; et
le module d'analyse (112) est configuré de manière à déterminer la position d'énoncé de départ de l'énoncé complet selon les données audio et les données de sous-titres au cours de la première durée prédéfinie avant la position temporelle.

9. Programme informatique, incluant des instructions pour exécuter les étapes d'un procédé de lecture de contenu multimédia selon l'une quelconque des revendications 1 à 4, lorsque ledit programme est exécuté par un ordinateur.

10. Support d'enregistrement lisible par un ordinateur, et sur lequel est enregistré un programme informatique incluant des instructions pour exécuter les étapes d'un procédé de lecture de contenu multimédia selon l'une quelconque des revendications 1 à 4.
